# EUROPÄISCHE PATENTSCHRIFT

(11) **EP 3 685 151 B1**
(45) Veröffentlichungstag und Bekanntmachung des Hinweises auf die Patenterteilung: **19.01.2022**
(21) Anmeldenummer: 18779593.5
(22) Anmeldetag: 21.09.2018
(51) Int. Cl.: G01N 29/11, G01S 15/93, G01N 29/44, G01N 29/48, G01S 7/527

(54) **VERFAHREN UND VORRICHTUNG ZUM VERARBEITEN EINES VON EINEM AKUSTISCHEN SENSOR EMPFANGENEN ECHOSIGNALS**
METHOD AND DEVICE FOR PROCESSING AN ECHO SIGNAL RECEIVED BY AN ACOUSTIC SENSOR
PROCÉDÉ ET DISPOSITIF POUR TRAITER UN SIGNAL D'ÉCHO REÇU PAR UN CAPTEUR ACOUSTIQUE

(30) Priorität: 22.09.2017 DE 102017216825
(43) Veröffentlichungstag der Anmeldung: 29.07.2020
(73) Patentinhaber: Robert Bosch GmbH, 70442 Stuttgart (DE)
(72) Erfinder: SCHMID, Dirk, 75397 Simmozheim (DE); SCHUMANN, Michael, 70597 Stuttgart (DE)
(86) Internationale Anmeldenummer: PCT/EP2018/075548
(87) Internationale Veröffentlichungsnummer: WO 2019/057864

(56) Entgegenhaltungen:
- EP-A1- 1 562 050
- EP-A2- 2 159 601
- US-A- 4 435 984

## Beschreibung

### Stand der Technik

Die vorliegende Erfindung betrifft ein Verfahren zum Verarbeiten eines von einem akustischen Sensor empfangenen Echosignals.

Beim Auswerten von Echosignalen wird bislang, insbesondere im automotiven Umfeld, nicht zwischen verschiedenen Arten von Störern unterschieden. So ist es insbesondere bislang nicht möglich, schmalbandige von breitbandigen Störern zu unterscheiden. Schmalbandige Störer werden auch als "CW-Störer" bezeichnet, wobei "CW'' für "continuous wave" steht.

Verfahren zum Verarbeiten eines von einem akustischen Sensor empfangenen Echosignals sind beispielsweise in den Offenlegungsschriften Schriften EP 1562050 A1, EP 2159601 A2US 4435984 A offenbart.

### Offenbarung der Erfindung

Das erfindungsgemäße Verfahren zum Verarbeiten eines von einem akustischen Sensor empfangenen Echosignals umfasst ein Erfassen des Echosignals über ein zeitliches Messintervall hinweg, ein Ermitteln eines Minimalwertes, welcher eine minimale Amplitude des Echosignals innerhalb des Messintervalls beschreibt, ein Ermitteln eines Amplitudenwertes, welcher eine Amplitude des Echosignals innerhalb eines Messfensters beschreibt, wobei das Messfenster ein vordefiniertes zeitliches Intervall innerhalb des Messintervalls ist, ein Ermitteln einer Differenz zwischen dem Minimalwert und dem Amplitudenwert, und ein Feststellen, ob das Echosignal ein Störsignal erster Art oder ein Störsignal zweiter Art umfasst, basierend auf der ermittelten Differenz.

Das Echosignal ist ein elektrisches Signal, welches durch den akustischen Sensor bereitgestellt wird. Dabei wandelt der akustische Sensor typischerweise eine Schwingung einer Membran eines akustischen Wandlers in ein elektrisches Signal um, welches als Echosignal bezeichnet wird und als Ausgangssignal von dem akustischen Sensor bereitgestellt wird.

Der Minimalwert beschreibt eine minimale Amplitude des Echosignals innerhalb des Messintervalls. Das bedeutet, dass eine minimale Anregung des akustischen Sensors ermittelt wird. Dabei wird lediglich das zeitliche Messintervall betrachtet, um den Minimalwert zu ermitteln.

Das zeitliche Messintervall beginnt bevorzugt mit einem Zeitpunkt, zu dem eine Anregung des akustischen Sensors erfolgt und endet bevorzugt mit Beginn einer erneuten Anregung des akustischen Sensors. So ergibt sich das zeitliche Messintervall beispielsweise aus einer maximalen Reichweite des akustischen Sensors. Das Messintervall umfasst bevorzugt zumindest einen Zeitraum, in welchem der akustische Sensor akustische Signale empfängt. Das Messintervall umfasst oder entspricht bevorzugt einem solchen Zeitintervall, welches auch für die Auswertung des Echosignals bezüglich einer Distanzmessung mittels des akustischen Sensors ausgewertet wird.

Der Amplitudenwert beschreibt eine Amplitude des Echosignals innerhalb eines Messfensters. Das bedeutet, dass ein repräsentativer Wert ermittelt wird, welcher eine Amplitude des Echosignals innerhalb des Messfensters beschreibt. Dabei ist der Amplitudenwert ein Wert, welche über das gesamte Messfenster hinweg ermittelt wird und die in dem Messfenster vorliegenden Amplituden zu einem Amplitudenwert zusammenfasst.

Das Messfenster ist ein vordefiniertes zeitliches Intervall innerhalb des Messintervalls. Somit wird innerhalb eines zeitlich begrenzten Bereiches, welcher innerhalb des Messintervalls liegt, eine Betrachtung der Amplitude des Echosignals ausgeführt.

Mit dem Minimalwert und dem Amplitudenwert werden zwei Werte ermittelt, welche beide jeweils eine Amplitude des Echosignals beschreiben. Es wird eine Differenz zwischen diesen Werten berechnet. Dies bedeutet mit anderen Worten, dass der Minimalwert mit dem Amplitudenwert verglichen wird. Der somit ermittelte Wert, also die Differenz zwischen dem Minimalwert und dem Amplitudenwert ist dazu geeignet, ein in dem Echosignal vorliegendes Störsignal zu identifizieren.

So wird die Differenz insbesondere mit einem vorgegebenen ersten Schwellenwert verglichen und es wird ein Störsignal erster Art festgestellt, wenn die Differenz kleiner als der erste Schwellenwert ist. Ein Störsignal zweiter Art wird beispielsweise dann festgestellt, wenn die Differenz größer oder gleich als ein zweiter Schwellenwert ist. Dabei kann der erste Schwellenwert gleich dem zweiten Schwellenwert sein. Insbesondere ist das Störsignal erster Art eine schmalbandige Störung oder eine von einem CW-Störer verursachte Störung, und das Störsignal zweiter Art ist eine von einem breitbandigen Störer verursachte Störung.

Die Unteransprüche zeigen bevorzugte Weiterbildungen der Erfindung.

Bevorzugt liegt das Messfenster zeitlich in einer Hälfte des Messintervalls, welches ein Ende des Messintervalls ist. Besonders bevorzugt liegt das Messfenster zeitlich in einem Viertel des Messintervalls, welches ein Ende des Messintervalls ist. Dabei liegt das Messfenster insbesondere vollständig in der entsprechenden Hälfte oder dem entsprechenden Viertel des Messintervalls. Dabei ist das Messintervall bevorzugt so gewählt, dass dieses mit einem Aussenden eines akustischen Signals mittels des akustischen Sensors, mit einem Ende eines Ausschwingens nach einer Anregung des akustischen Sensors oder mit einem Beginn einer Empfangsphase des akustischen Sensors beginnt. Weiter bevorzugt ist das Messintervall so gewählt, dass dieses mit einem Ende einer Empfangsphase des akustischen Sensors, nach Ablauf eines vorgegebenen Zeitintervalls oder mit dem Beginn einer folgenden Sendephase des akustischen Sensors endet. Durch die entsprechende Auswahl des Messfensters wird sichergestellt, dass der ermittelte Amplitudenwert nicht durch Störeinflüsse beeinflusst wird, welche sich beispielsweise durch ein Anregen des akustischen Sensors oder durch Bodenechos ergeben. Durch das Anordnen des Messfensters in einem hinteren Bereich des Messintervalls wird sichergestellt, dass der Minimalwert und der Amplitudenwert nicht durch ein Sensorverhalten des akustischen Sensors, wie beispielsweise ein Ausschwingverhalten, verfälscht wird.

Auch ist es vorteilhaft, wenn bei dem Ermitteln des Amplitudenwertes ein Mittelwert und/oder Medianwert des Echosignals innerhalb des Messfensters als Amplitudenwert ermittelt wird. So kann auf einfache Weise ein repräsentativer Wert für das Messfenster als Amplitudenwert ermittelt werden.

Ferner ist es vorteilhaft, wenn das Messfenster ausschließlich in einem zeitlichen Bereich des Messintervalls liegt, in dem das Echosignal nicht von einem Boden-Clutter dominiert wird. Ein Boden-Clutter ist eine Störung in dem Echosignal, welche durch Bodenreflektionen verursacht wird. Der zeitliche Bereich des Messintervalls, in welchem ein solcher Boden-Clutter auftritt, ist typischerweise bekannt, da dieser sich aus einer entsprechenden Anordnung des akustischen Sensors ergibt. Entsprechend ist es möglich, das Messfenster basierend auf technischen Überlegungen so zu wählen, dass das Messfenster ausschließlich in dem zeitlichen Bereich des Messintervalls liegt, in dem das Echosignal nicht von dem Boden-Clutter dominiert wird. Es werden somit Störeffekte durch Bodenreflektionen vermieden.

Auch ist es vorteilhaft, wenn basierend darauf, ob das Störsignal ein Störsignal erster Art oder ein Störsignal zweiter Art ist, eine Signalform gewählt wird, welche für eine Anregung des akustischen Wandlers verwendet wird, dessen Echo sich in dem Echosignal wiederfindet. Der akustische Wandler ist dabei bevorzugt eine Komponente des akustischen Sensors. Der akustische Wandler kann jedoch auch getrennt von dem akustischen Sensor angeordnet sein. Um die Signalform zu wählen, wird bevorzugt ein Steuersignal bereitgestellt. Dieses kann von einer Steuerelektronik des akustischen Wandlers genutzt werden, um den akustischen Wandler entsprechend der Art des Störsignals anzuregen. Besonders bevorzugt wird der akustische Wandler unmittelbar durch die Vorrichtung zum Verarbeiten des von einem akustischen Sensor empfangenen Echosignals angeregt. Durch das Wählen der Signalform basierend auf der Art des Störsignals wird es ermöglicht auf vorliegende Störungen zu reagieren. So kann die Signalform so gewählt werden, dass das Echosignal bei einer folgenden Auswertung möglichst wenig von den vorliegenden Störsignalen beeinflusst wird.

Auch ist es vorteilhaft, wenn in Reaktion darauf, dass das Störsignal ein Störsignal erster Art ist, ein Wechsel der Signalform erfolgt. Dabei ist es insbesondere vorteilhaft, wenn in einem Falle, in dem das Störsignal ein Störsignal zweiter Art ist, die Signalform beibehalten wird, welche auch in einem vorangegangenen Sendezyklus des akustischen Wandlers genutzt wurde. Auf diese Weise wird es ermöglicht, dass die Signalform nur dann gewechselt wird, wenn dieses sich vorteilhaft bei einer Auswertung des Echosignals zeigt. Es wird somit vermieden, dass eine weitere Verarbeitung des Echosignals nachteilig beeinflusst wird.

Auch ist es vorteilhaft, basierend auf dem Amplitudenwert und einem Vergleichswert ermittelt wird, ob entweder ein Störsignal erster Art oder Störsignal zweiter Art vorliegt oder kein Störsignal vorliegt. Es wird somit zunächst ermittelt, ob überhaupt ein Störsignal vorliegt. Dies erfolgt bevorzugt bevor das Feststellen erfolgt, ob das Störsignal ein Störsignal erster Art oder ein Störsignal zweiter Art umfasst. Wird ermittelt, dass kein Störsignal vorliegt, so kann der Schritt des Feststellens, ob das Echosignal ein Störsignal erster Art oder ein Störsignal zweiter Art für ein aktuelles Messintervall übersprungen werden.

Insbesondere ist es vorteilhaft, wenn der akustische Sensor ein Ultraschallsensor ist. Gerade solche Sensoren werden oftmals im Bereich der automotiven Anwendung genutzt und sind vielfach an Fahrzeugen verbaut. Gerade in diesem Umfeld treten vielseitige Arten von Störsignalen auf, und eine Eliminierung von Störsignalen bei einer Auswertung von erfassten Echosignalen ist vorteilhaft.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: ein Ablaufdiagramm des erfindungsgemäßen Verfahrens gemäß einer ersten Ausführungsform der Erfindung,
- Figur 2: eine Darstellung eines Fahrzeuges, welches eine Vorrichtung umfasst,
- Figur 3: eine Darstellung eines Amplitudenverlaufs eines Echosignals über ein Messintervall hinweg, wobei das Echosignal nicht von einem Störsignal beeinflusst wurde,
- Figur 4: eine Darstellung eines Amplitudenverlaufs des Echosignals über das Messintervall hinweg, wobei das Echosignal von einem breitbandigen Störsignal gestört wurde, und
- Figur 5: eine Darstellung eines Amplitudenverlaufs des Echosignals über das zeitliche Messintervall hinweg, wobei das Echosignal durch ein schmalbandiges Störsignal gestört wurde.

### Ausführungsformen der Erfindung

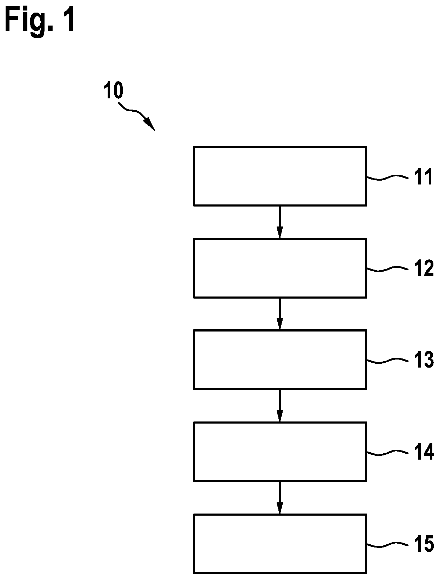

Figur 1 stellt ein Ablaufdiagramm 10 eines Verfahrens zum Verarbeiten eines von einem akustischen Sensor 3 empfangenen Echosignals 20 gemäß einer ersten Ausführungsform der Erfindung dar. Das in Figur 1 dargestellte Verfahren wird von einer Vorrichtung 1 zum Verarbeiten des von dem akustischen Sensor 3 empfangenen Echosignals 20 durchgeführt. Dabei werden die in dem Ablaufdiagramm 10 dargestellten Schritte mittels einer Signalverarbeitungseinheit 2 ausgeführt.

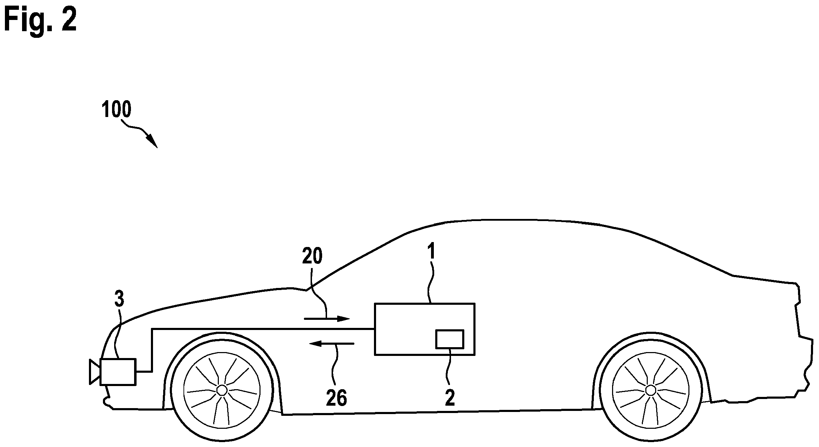

Die Vorrichtung 1 ist in Figur 2 dargestellt, wobei die Vorrichtung 1 in einem Fahrzeug 100 angeordnet ist. An dem Fahrzeug 100 ist ferner der akustische Sensor 3 angeordnet. Die Vorrichtung 1 umfasst die Signalverarbeitungseinheit 2. Die Signalverarbeitungseinheit 2 ist dabei in dieser ersten Ausführungsform eine digitale Recheneinheit. Der akustische Sensor 3 ist über eine Signalleitung mit der Vorrichtung 1 verbunden.

Durch die Vorrichtung und das erfindungsgemäße Verfahren gemäß dieser ersten Ausführungsform ist es möglich festzustellen, ob das Echosignal 20 ein Störsignal erster Art oder ein Störsignal zweiter Art umfasst. Ein Störsignal erster Art ist dabei ein schmalbandiges Störsignal. Ein Störsignal zweiter Art ist dabei ein breitbandiges Störsignal.

Breitbandige Störsignale werden von breitbandigen Störern verursacht und sind üblicherweise durch ein breites Frequenzspektrum gekennzeichnet. Das breitbandige Frequenzspektrum deckt typischerweise einen gesamten empfindlichen Detektionsbereich des akustischen Sensors 3 ab oder überschreitet diesen sogar. Ferner weisen solche breitbandigen Störsignale eine stochastische Amplitudenverteilung auf, welche auch als Rauschen bezeichnet wird. Typische Störquellen mit signifikanter Signalenergie im Ultraschallbereich sind dabei beispielsweise Reifenabrollgeräusche, Windgeräusche, Presslufthammer an Baustellen oder Druckluftbremsen an LKWs.

Schmalbandige Störer, welche auch als CW-Störer bezeichnet werden, zeichnen sich im Spektrum durch schmale Linien bei einer bestimmten Frequenz aus. Die Einkopplung einer schmalbandigen Störung kann akustisch oder elektromagnetisch in einen Sensorenempfangskreis erfolgen, welcher für eine Steuerung des akustischen Sensors 3 genutzt wird. Mögliche Quellen für schmalbandige Störer sind Induktionsschleifen, Aggregate im Motorraum des Fahrzeuges 100, wie z.B. Pumpen oder Generator, oder Turbolader.

In einem ersten Schritt 11 des Verfahrens erfolgt ein Erfassen des Echosignals 20 über ein zeitliches Messintervall 21 hinweg. Das Echosignal 20 wird von dem akustischen Sensor 3 der Signalverarbeitungseinheit 2 bereitgestellt. Das Echosignal 20 ist ein elektrisches Ausgangssignal, welches von dem akustischen Sensor 3 bereitgestellt wird.

Der akustische Sensor 3 umfasst einen akustischen Wandler. Der akustische Wandler wird während einem Anregungsintervall 28 durch ein elektrisches Signal angeregt, welches als ein Anregungssignal 26 von der Signalverarbeitungseinheit 2 bereitgestellt wird. Es wird darauf hingewiesen, dass das Anregungssignal 26 in alternativen Ausführungsformen auch von anderen Steuereinrichtungen bereitgestellt werden kann. Das Anregungssignal 26 weist eine bestimmte Signalform auf, wobei eine mechanische Schwingung des akustischen Wandlers von der Signalform abhängig ist. So wird dem akustischen Sensor 3 und somit dem akustischen Wandler beispielsweise in dem Anregungsintervall 28 ein Anregungssignal 26 mit steigender oder abfallender Frequenz bereitgestellt, welches auch als Chirp-Signal bezeichnet wird.

In dem Anregungsintervall 28 wird eine Membran des akustischen Sensors 3 durch das Anregungssignal 26 zu einer mechanischen Schwingung angeregt und beginnt daher gemäß dem Anregungssignal 26 zu schwingen. In der Folge wird ein akustisches Signal von dem akustischen Sensor 3 abgestrahlt. Dieses wird an Objekten in der Umgebung des akustischen Sensors 3 reflektiert und zu dem akustischen Sensor 3 zurückgeworfen. In einem Empfangsintervall 29, welches auf das Anregungsintervall 28 folgt, wird der akustische Wandler des akustischen Sensors 3 nicht weiter durch das Anregungssignal 26 angeregt, sondern wird durch empfangene Schallwellen zu einem Schwingen angeregt. So regen insbesondere solche Schallwellen die Membran des akustischen Wandlers zu einer Schwingung an, welche von den Objekten in der Umgebung des akustischen Sensors 3 als ein Echo zurückgeworfen werden. Die durch die empfangenen Schallwellen verursachten mechanischen Schwingungen der Membran des akustischen Wandlers werden in ein elektrisches Signal umgesetzt und von dem akustischen Sensor 3 in dem Ausgangssignal bereitgestellt.

Das Ausgangssignal des akustischen Sensors 3 über das Anregungsintervall und das Empfangsintervall hinweg wird als Echosignal 20 bezeichnet. Das Echosignal 20 umfasst in dieser ersten Ausführungsform somit Informationen bezüglich des Anregungsintervalls 28 und bezüglich des Empfangsintervalls 29. In alternativen Ausführungsformen umfasst das Echosignal 20 ausschließlich Informationen bezüglich des Empfangsintervalls 29.

Das Echosignal 20 wird der Signalverarbeitungseinheit 2 über die Signalleitung bereitgestellt. Die Signalverarbeitungseinheit 2 erfasst das Echosignal 20 über das zeitliche Messintervall 21 hinweg. Das Messintervall 21 ist dabei in dieser Ausführungsform so gewählt, dass dieses genau ein Anregungsintervall 28 und genau ein auf das Anregungsintervall 28 folgendes Empfangsintervall 29 umfasst. Somit ist das Messintervall 21 so gewählt, dass dieses lediglich das Anregungsintervall 28 und das Empfangsintervall 29 eines einzelnen Sende-/Empfangszyklus des akustischen Sensors 3 umfasst. Ein Sende-/Empfangszyklus des akustischen Sensors 3 ist dabei ein solches Zeitintervall, in dem der akustische Sensor 3 ein akustisches Signal aussendet und dessen Echos empfängt. Um festzustellen, ob das Echosignal 20 ein Störsignal erster Art oder ein Störsignal zweiter Art umfasst, wird somit bevorzugt ein einzelner Sende-/Empfangszyklus betrachtet.

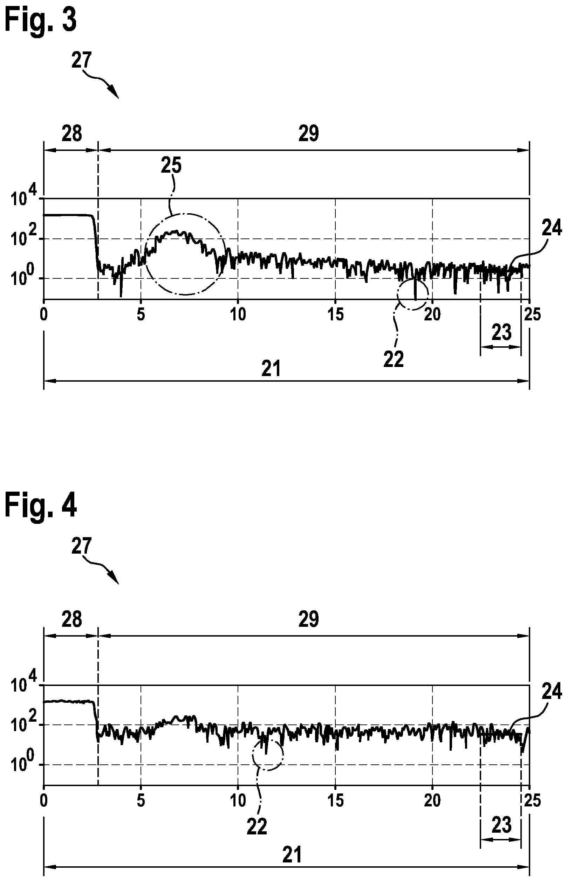

Es folgt eine Auswertung des Echosignals 20, um die Amplitude des Echosignals 20 über einen zeitlichen Verlauf über das Messintervall 21 hinweg zu ermitteln. Es wird somit ein Amplitudenverlauf 27 des Echosignals 20 ermittelt. Ein solcher Amplitudenverlauf 27 des Echosignals 20 ist beispielhaft in Figur 3 dargestellt. Dabei wurde das dem in Figur 3 dargestellten Amplitudenverlauf 27 zugrundeliegende Echosignal 20 nicht durch einen Störer gestört, umfasst also weder ein Störsignal erster Art noch ein Störsignal zweiter Art.

Die in den Figuren 3 bis 5 dargestellten Amplitudenverläufe 27 stellen unterschiedliche beispielhafte Amplitudenverläufe 27 des Echosignals 20 dar, wobei das Echosignal 20 unterschiedlichen Störeinflüssen unterliegt. Dabei ist über eine X-Achse ein zeitlicher Verlauf dargestellt, welcher jeweils das Anregungsintervall 28 und das Empfangsintervall 29 umfasst und somit dem Messintervall 21 entspricht. Das Messintervall 21 erstreckt sich über einen Zeitraum von beispielhaft gewählten 25ms. Über eine Hochachse ist in den Figuren 3 bis 5 die Amplitude des Echosignals 20 dargestellt. Der Amplitudenverlauf 27 ist somit ein zeitlicher Verlauf der Amplitude des Echosignals 20.

Mit Hinblick auf Figur 3 ist ersichtlich, dass in dem Anregungsintervall 28, welches sich über die ersten zwei Millisekunden des Messintervalls 21 hinweg erstreckt, eine maximale Amplitude des Echosignals 20 vorliegt. Dies ist darin begründet, dass der akustische Sensor 3 in diesem Zeitraum durch das Anregungssignal 26 aktiv angeregt wird. Im Anschluss an das Anregungsintervall 28 erfolgt ein kurzes Ausschwingen des akustischen Sensors 3, also ein Ausschwingen der Membran des akustischen Wandlers des akustischen Sensors 3.

Nach dem Ausschwingen ist ersichtlich, dass in einem Zeitintervall, welches sich in dem Zeitbereich zwischen 6 und 8 ms erstreckt, ein Ansteigen der Amplitude erkenntlich ist. Dies ist darin begründet, dass ein sog. Boden-Clutter das Echosignal 20 dominiert. Dies ist darin begründet, dass der akustische Sensor 3 in dieser Ausführungsform an dem Fahrzeug 100 angeordnet ist und somit in einem definierten Abstand über einer Fahrbahnoberfläche angeordnet ist, auf welcher sich das Fahrzeug 100 befindet. Von der Fahrbahnoberfläche werden akustische Signale, also Echos, zu dem akustischen Sensor 3 zurückgeworfen und finden somit Eingang in das Echosignal 20.

An einem Ende des Messintervalls 21 fällt ein Mittelwert des Echosignals 20 auf das Niveau eines Grundrauschens ab. Es ist ersichtlich, dass das Echosignal 20 Punkte aufweist, an denen der Amplitudenverlauf ein Minimum aufweist. Das Minimum wird durch einen Minimalwert 22 beschrieben. Es gibt somit Zeitpunkte, zu denen eine Amplitude des Echosignals 20 nahezu Null-Niveau erreicht.

Es ist zu beachten, dass bei den in den Figuren 3 bis 5 gewählten Darstellungen ein logarithmischer Maßstab vorliegt und somit dargestellte Amplitudenunterschiede geringer erscheinen, als diese tatsächlich sind.

Nachdem das Echosignal 20 in dem ersten Schritt 11 über das zeitliche Messintervall 21 hinweg erfasst wurde, folgt in einem zweiten Schritt 12 ein Ermitteln des Minimalwertes 22, welcher eine minimale Amplitude des Echosignals 20 innerhalb des Messintervalls 21 beschreibt. Es wird somit der Minimalwert 22 in dem Amplitudenverlauf 27 des Echosignals 20 ermittelt. Dies kann beispielsweise mittels einer mathematischen Auswertung oder einer Schwellenwertdetektion mit einem veränderlichen Schwellenwert erfolgen. In den Figuren 3 bis 5 ist der Minimalwert 22 jeweils gekennzeichnet. Es ist ersichtlich, dass der Minimalwert 22 der Wert in dem jeweiligen Amplitudenverlauf 27 des Echosignals 20 ist, welcher der in den Figuren 3 bis 5 gewählten Darstellung einem Null-Wert auf der Hochachse am nächsten kommt. Wurde der Minimalwert 22 ermittelt, so wird dieser gespeichert.

Nachdem der Minimalwert 22 in dem zweiten Schritt 12 ermittelt wurde, wird ein dritter Schritt 13 ausgeführt. In dem dritten Schritt 13 erfolgt ein Ermitteln eines Amplitudenwerts 24, welcher eine Amplitude des Echosignals 20 innerhalb eines Messfensters 23 beschreibt. Dabei ist das Messfenster 23 ein vordefiniertes zeitliches Intervall innerhalb des Messintervalls 21. Das Messfenster 23 ist dabei so gewählt, dass dieses ausschließlich in einem zeitlichen Bereich 25 des Messintervalls 21 liegt, in dem das Echosignal 20 nicht von einem Boden-Clutter dominiert wird. Der zeitliche Bereich des Messintervalls 21, in dem das Echosignal 20 von einem Boden-Clutter dominiert wird, ergibt sich aus der Anordnung des akustischen Sensors 3 an dem Fahrzeug 100. Durch diese Anordnung ist ein Abstand zwischen dem akustischen Sensor 3 und der Fahrbahnoberfläche definiert. Da der akustische Sensor 3 in einer typischen Höhe über der Fahrbahnoberfläche an Fahrzeugen angeordnet ist, ist es möglich, in der Signalverarbeitungseinheit 2 einen vorgegebenen Wert zu definieren, welcher als ein Anfangszeitpunkt für das Messfenster 23 gewählt werden soll, so dass dieses mit Sicherheit außerhalb des zeitlichen Bereichs 25 liegt, in dem das Echosignal 20 von dem Boden-Clutter dominiert wird. Eine individuelle Anpassung des Messfensters 23 an eine Anordnung des akustischen Sensors 3 an dem Fahrzeug 100 ist jedoch vorteilhaft.

Wie aus den Figuren 3 bis 5 ersichtlich ist, kommt es insbesondere am Ende des Messintervalls 21 dazu, dass das Echosignal 20 bzw. die Amplitude des Echosignals 20 sich dem Niveau des Grundrauschens nähert. Daher ist es vorteilhaft, das Messfenster 23 am zeitlichen Ende des Messintervalls 21 anzuordnen. In der gezeigten Ausführungsform ist das Messfenster 23 in einer zweiten Hälfte des Messintervalls 21 und sogar in einem letzten Viertel des Messintervalls 21 angeordnet. Die Länge des Messfensters 23, also die zeitliche Dauer über die sich das Messfenster 23 erstreckt, ist dabei in dieser ersten Ausführungsform auf einen festen Wert von 2ms festgelegt.

Bei dem Ermitteln des Amplitudenwertes 24 wird ein Mittelwert der Amplitude des Echosignals 20 ermittelt, wobei der Mittelwert über das Messfenster 23 hinweg ermittelt wird. Es erfolgt somit eine Mittelwertbildung über das Messfenster 23 hinweg. Der so ermittelte Mittelwert wird als Amplitudenwert 24 gespeichert. Alternativ zum Mittelwert kann auch ein Medianwert ermittelt und als Amplitudenwert 24 gespeichert werden.

Nach dem Ermitteln des Amplitudenwertes 24 in dem dritten Schritt 13 wird ein vierter Schritt 14 ausgeführt. In dem vierten Schritt 14 erfolgt ein Ermitteln einer Differenz zwischen dem Minimalwert 22 und dem Amplitudenwert 24. Es wird somit der Minimalwert 22, welcher in dem zweiten Schritt 12 gespeichert wurde, mit dem Amplitudenwert 24, welcher in dem dritten Schritt 13 ermittelt wurde, verglichen. Basierend auf dem Unterschied zwischen dem Minimalwert 22 und dem Amplitudenwert 24 kann darauf geschlossen werden, ob ein Störsignal erster Art oder ein Störsignal zweiter Art auf das Echosignal 20 genommen hat.

In einem fünften Schritt 15, welcher nach dem vierten Schritt 14 ausgeführt wird, erfolgt ein Feststellen, ob das Echosignal 20 ein Störsignal erster Art oder ein Störsignal zweiter Art umfasst. Dies erfolgt basierend auf der in dem vierten Schritt 14 ermittelten Differenz.

Bevor in dem fünften Schritt 15 das Feststellen erfolgt, ob das Echosignal 20 ein Störsignal erster Art oder ein Störsignal zweiter Art umfasst wird jedoch zunächst basierend auf dem Amplitudenwert 24 und einem Vergleichswert ermittelt, ob entweder ein Störsignal erster Art oder Störsignal zweiter Art vorliegt oder kein Störsignal vorliegt. Es wird somit zunächst ermittelt, ob überhaupt ein Störsignal Einfluss auf das Echosignal 20 genommen hat. Der Vergleichswert ist so gewählt, dass dieser dem Amplitudenwert 24 entspricht, wenn das Echosignal 20 nicht gestört wurde. Der Vergleichswert ist somit ein voreingestellter Wert. Weicht der Amplitudenwert 24 weiter als ein vorgegebenes Limit von dem Vergleichswert ab, so liegt entweder ein Störsignal erster Art oder ein Störsignal zweiter Art in dem Echosignal 20 vor. In diesem Falle kann im Weiteren Verlauf des Verfahrens festgestellt werden, ob das Störsignal ein Störsignal erster Art oder ein Störsignal zweiter Art ist. Weicht der Amplitudenwert 24 weniger als das vorgegebene Limit von dem Vergleichswert ab, so liegt entweder kein Störsignal in dem Echosignal 20 vor. Auf das folgende Feststellen, ob das Störsignal ein Störsignal erster Art oder ein Störsignal zweiter Art ist wird verzichtet.

Der erfindungsgemäßen Auswertung liegt das Prinzip zugrunde, dass bei vorhandenen Störungen ein Grundrauschniveau in dem Echosignal erhöht ist. Handelt es sich um einen breitbandigen Rauschstörer, also ein Störsignal zweiter Art, so fluktuiert das Echosignal 20 stark. Es enthält somit in diesem Falle eine breite Amplitudenverteilung, wobei auch Werte nahe Null vorkommen. Ist ein vorliegendes Störsignal ein Störsignal erster Art, so erhöht sich ebenfalls ein Empfangssignalpegel des Echosignals 20, wobei aber nahezu keine Fluktuation des Signals stattfindet. Dies führt dazu, dass ein nahezu konstantes Signal vorliegt, welches zu keiner Zeit gleich Null wird.

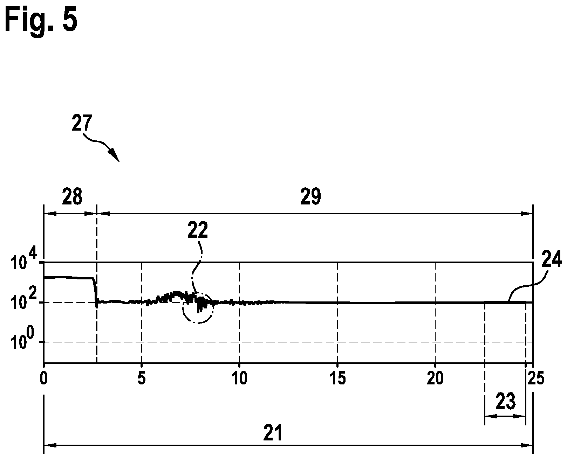

Das erfindungsgemäße Verfahren bestimmt während des Messintervalls 21 ein kleinstes auftretendes Signal und vergleicht dieses mit dem durch den Amplitudenwert 24 beschriebenen Mittelwert. Der Mittelwert ist somit auch ein Medianwert in dem Messfenster 23 am Ende des Messintervalls 21. Ist der Minimalwert 22 in etwa gleich dem Amplitudenwert 24, also gleich dem Mittelwert, so kann von einem CW-Störer, also einem Störer erster Art ausgegangen werden. Ist das Minimum deutlich kleiner als der Amplitudenwert 24, als deutlich kleiner als der Mittelwert, oder ist das Minimum sogar gleich einem Nullwert, so kann auf einen breitbandigen stochastischen Störer, also einen Störer zweiter Art geschlossen werden. Es wird diesbezüglich ferner auf die Figuren 4 und 5 verwiesen.

In Figur 4 ist der Amplitudenverlauf 27 des Echosignals 20 dargestellt, wobei das Echosignal 20 durch ein breitbandiges Störgeräusch, in diesem Beispiel durch Druckluft, gestört wurde. Es liegt somit ein Störsignal zweiter Art vor. Es ist ersichtlich, dass der Amplitudenwert 24 deutlich erhöht gegenüber dem in Figur 3 vorliegenden Amplitudenwert 24 ist. Schon durch diesen erhöhten Amplitudenwert kann erkannt werden, dass ein Störsignal vorliegt und kein ungestörtes Echosignal 20 vorliegt. Es kann somit mittels eines Vergleichs des Amplitudenwertes 24 mit dem vorgegebenen Vergleichswert ermittelt werden, ob irgendein Störsignal Einfluss auf das Echosignal 20 genommen hat.

Bei dem in Figur 4 dargestellten Beispiel ist ersichtlich, dass in dem dargestellten Messintervall 21 die Amplitude des Echosignals 20 immer wieder auf geringe Werte abfällt. Es wird daher festgestellt, dass die Differenz zwischen dem Minimalwert 22 und dem Amplitudenwert 24 größer als ein vorgegebener Schwellenwert ist und somit ein Störsignal zweiter Art, also ein breitbandiges Störsignal vorliegt.

In Figur 5 ist der Amplitudenverlauf des Echosignals 20 für ein Störsignal erster Art, also für einen schmalbandigen Störer, beispielhaft dargestellt. Es ist ersichtlich, dass der Amplitudenwert 24 und somit der Mittelwert am Ende des Messintervalls 21 ebenfalls deutlich erhöht ist. Es kann somit festgestellt werden, dass ein Störsignal Einfluss auf das Echosignal 20 genommen hat, indem der Amplitudenwert 24 mit dem zuvor genannten Vergleichswert verglichen wird.

Es ist ferner ersichtlich, dass die Differenz zwischen dem Minimalwert 22 und dem Amplitudenwert 24 dabei geringer ist als bei dem in Figur 4 dargestellten Störsignal zweiter Art. Es wird daher festgestellt, dass die Differenz zwischen dem Minimalwert 22 und dem Amplitudenwert 24 kleiner als der vorgegebene Schwellenwert ist und somit ein Störsignal erster Art, also ein schmallbandiges Störsignal vorliegt. Es wird somit festgestellt, dass das Echosignal 20 ein Störsignal erster Art umfasst.

Es wird somit durch einen Vergleich mit dem Schwellenwert festgestellt, ob das Echosignal 20 ein Störsignal erster Art oder ein Störsignal zweiter Art umfasst, wobei die ermittelte Differenz zwischen dem Minimalwert 22 und dem Amplitudenwert 24 mit dem vordefinierten Schwellenwert verglichen wird.

In weiteren vorteilhaften Schritten des Verfahrens, kann die so gewonnene Information bezüglich eines Vorliegens eines Störsignals erster Art oder zweiter Art vorteilhaft genutzt werden. So wird beispielsweise basierend darauf, ob das Störsignal ein Störsignal erster oder ein Störsignal zweiter Art ist, die Signalform gewählt, welche für die Anregung des akustischen Wandlers 3 verwendet wird. Das von dem akustischen Wandler ausgesandte akustische Signal wird an Objekten in der Umgebung des akustischen Sensors 3 reflektiert und zu dem akustischen Sensor 3 zurückgeworfen. Somit findet sich ein Echo des akustischen Wandlers in dem Echosignal 20 wieder. Bei einer Auswertung des Echosignals 20 zum Ermitteln von Distanzen zwischen den Objekten und dem akustischen Sensor erfolgt eine Anwendung angepasster Optimalfilter, welche jeweils nur einen relevanten Frequenzbereich zur Echodetektion bereitstellen. Signale außerhalb dieses Frequenzbereiches werden gedämpft. Dabei sind die Optimalfilter so gewählt, dass diese auf eine Frequenz in dem Anregungssignal 26 angepasst sind. Mit anderen Worten bedeutet dies, dass von dem akustischen Sensor 3 ein akustisches Signal in einer bestimmten Frequenz oder in einem bestimmten Frequenzspektrum ausgesandt wird und das Echosignal 20 so gefiltert wird, dass lediglich dieses Frequenzspektrum für eine Auswertung zum Auffinden von empfangenen Echos herangezogen wird.

Wird festgestellt, dass das Echosignal 20 ein Störsignal erster Art umfasst, so ist es vorteilhaft, die Signalform des Anregungssignals 26 zu ändern. Somit wird ein akustisches Signal in einem anderen Frequenzbereich ausgesendet und empfangene Echos finden sich in einem anderen Frequenzbereich des Echosignals 20 wieder. Der Optimalfilter wird entsprechend der Signalform angepasst.

Liegt ein Störsignal erster Art vor, so besteht eine hohe Wahrscheinlichkeit, dass ein Einfluss des Störsignals bei der Auswertung zum Auffinden von empfangenen Echos in einem folgenden Sende-/Empfangszyklus wirksam vermindert wird und die gewünschte Reichweite des akustischen Sensors 3 kann trotz des vorliegenden Störeinflusses beibehalten werden.

Ist das Störsignal ein Störsignal zweiter Art, liegt also ein breitbandiger Störer vor, so würde das Wechseln des Frequenzbereiches dagegen keine Verbesserung der Echo-Detektion bringen, da das Störsignal in dem gesamten Frequenzbereich vorliegt und somit kein Ausweichen möglich ist. Es ist somit nicht zielführend die Signalform des Anregungssignals 26 zu ändern. Vielmehr könnte dieses zu einer Verschlechterung der Echo-Detektion führen.

Es ist somit vorteilhaft in Reaktion darauf, dass das Störsignal ein Störsignal erster Art ist, die Signalform zu wechseln, durch welche der akustische Sensor 3 zum Aussenden des akustischen Signals angeregt wird.

Nebst oben stehender Offenbarung wird explizit auf die Offenbarung der Figuren 1 bis 5 verwiesen.

## Patentansprüche

1. Verfahren zum Verarbeiten eines von einem akustischen Sensor (3) empfangenen Echosignals (20), umfassend:
- Erfassen des Echosignals (20) über ein zeitliches Messintervall (21) hinweg,
- Ermitteln eines Minimalwertes (22), welcher eine minimale Amplitude des Echosignals (20) innerhalb des Messintervalls (21) beschreibt,
- Ermitteln eines Amplitudenwertes (24), welcher eine Amplitude des Echosignals (20) innerhalb eines Messfensters (23) beschreibt, wobei das Messfenster (23) ein vordefiniertes zeitliches Intervall innerhalb des Messintervalls (21) ist,
- Ermitteln einer Differenz zwischen dem Minimalwert (22) und dem Amplitudenwert (24), und
- Feststellen, ob das Echosignal (20) ein Störsignal erster Art oder ein Störsignal zweiter Art umfasst, basierend auf der ermittelten Differenz, wobei ein Störsignal erster Art festgestellt wird, wenn die Differenz kleiner als ein erster Schwellenwert ist und wobei ein Störsignal zweiter Art festgestellt wird, wenn die Differenz größer oder gleich als ein zweiter Schwellenwert ist.

2. Verfahren gemäß Anspruch 1, **dadurch gekennzeichnet, dass** das Messfenster (23) zeitlich in einer Hälfte des Messintervalls (21) liegt, welches ein Ende des Messintervalls (21) ist, und insbesondere in einem Viertel des Messintervalls (21) liegt, welches ein Ende des Messintervalls (21) ist.

3. Verfahren gemäß einem der vorherigen Ansprüche, **dadurch gekennzeichnet, dass** bei dem Ermitteln des Amplitudenwertes (24) ein Mittelwert und/oder ein Medianwert des Echosignals (20) innerhalb des Messfensters (23) als Amplitudenwert ermittelt wird.

4. Verfahren gemäß einem der vorherigen Ansprüche, **dadurch gekennzeichnet, dass** das Messfenster (23) ausschließlich in einem zeitlichen Bereich des Messintervalls (21) liegt, in dem das Echosignal nicht von einem Boden-Clutter dominiert wird, wobei ein Boden-Clutter eine Störung in dem Echosignal ist, welche durch Bodenreflektionen verursacht wird.

5. Verfahren gemäß einem der vorherigen Ansprüche, **dadurch gekennzeichnet, dass** basierend darauf, ob dass Störsignal ein Störsignal erster Art oder ein Störsignal zweiter Art ist, eine Signalform gewählt wird, welche für eine Anregung eines akustischen Wandlers verwendet wird, dessen Echo sich in dem Echosignal (20) wiederfindet.

6. Verfahren gemäß Anspruch 5, **dadurch gekennzeichnet, dass** in Reaktion darauf, dass das Störsignal ein Störsignal erster Art ist, ein Wechsel der Signalform erfolgt.

7. Verfahren gemäß einem der vorherigen Ansprüche, **dadurch gekennzeichnet, dass** basierend auf dem Amplitudenwert (24) und einem Vergleichswert ermittelt wird, ob entweder ein Störsignal erster Art oder Störsignal zweiter Art vorliegt oder kein Störsignal vorliegt.

8. Verfahren gemäß einem der vorherigen Ansprüche, **dadurch gekennzeichnet, dass** der akustische Sensor (3) ein Ultraschallsensor ist.

## Claims

1. Method for processing an echo signal (20) received by an acoustic sensor (3), comprising:
- recording the echo signal (20) over a temporal measurement interval (21),
- determining a minimum value (22) which describes a minimum amplitude of the echo signal (20) within the measurement interval (21),
- determining an amplitude value (24) which describes an amplitude of the echo signal (20) within a measurement window (23), wherein the measurement window (23) is a predefined temporal interval within the measurement interval (21),
- determining a difference between the minimum value (22) and the amplitude value (24), and
- ascertaining whether the echo signal (20) comprises a first type of interference signal or a second type of interference signal based on the determined difference, wherein a first type of interference signal is ascertained if the difference is less than a first threshold value, and wherein a second type of interference signal is ascertained if the difference is greater than or equal to a second threshold value.

2. Method according to Claim 1, **characterized in that** the measurement window (23) lies temporally in a half of the measurement interval (21) which is an end of the measurement interval (21) and, in particular, lies in a quarter of the measurement interval (21) which is an end of the measurement interval (21).

3. Method according to one of the preceding claims, **characterized in that**, when determining the amplitude value (24), a mean value and/or a median value of the echo signal (20) within the measurement window (23) is/are determined as the amplitude value.

4. Method according to one of the preceding claims, **characterized in that** the measurement window (23) lies solely in a temporal region of the measurement interval (21) in which the echo signal is not dominated by ground clutter, wherein ground clutter is interference in the echo signal which is caused by ground reflections.

5. Method according to one of the preceding claims, **characterized in that**, based on whether the interference signal is a first type of interference signal or a second type of interference signal, a signal waveform is selected and is used to excite an acoustic transducer, the echo of which is found in the echo signal (20) again.

6. Method according to Claim 5, **characterized in that** the signal waveform is changed in response to the interference signal being a first type of interference signal.

7. Method according to one of the preceding claims, **characterized in that** it is determined, based on the amplitude value (24) and a comparison value, whether either a first type of interference signal or a second type of interference signal is present or no interference signal is present.

8. Method according to one of the preceding claims, **characterized in that** the acoustic sensor (3) is an ultrasonic sensor.

## Revendications

1. Procédé de traitement d'un signal d'écho (20) reçu par un capteur acoustique (3), ledit procédé comprenant les étapes suivantes :
- détecter le signal d'écho (20) sur un intervalle de mesure temporel (21),
- déterminer une valeur minimale (22) qui décrit une amplitude minimale du signal d'écho (20) dans l'intervalle de mesure (21),
- déterminer une valeur d'amplitude (24) qui décrit une amplitude du signal d'écho (20) dans une fenêtre de mesure (23), la fenêtre de mesure (23) étant un intervalle de temps prédéfini dans l'intervalle de mesure (21),
- déterminer une différence entre la valeur minimale (22) et la valeur d'amplitude (24), et
- déterminer si le signal d'écho (20) comprend un signal parasite de premier type ou un signal parasite de deuxième type sur la base de la différence déterminée, un signal parasite de premier type étant déterminé si la différence est inférieure à une première valeur seuil et un signal parasite de deuxième type étant déterminé si la différence est supérieure ou égale à un deuxième seuil.

2. Procédé selon la revendication 1, **caractérisé en ce que** la fenêtre de mesure (23) est temporellement située dans une moitié de l'intervalle de mesure (21) qui est une extrémité de l'intervalle de mesure (21), et en particulier dans un quart de l'intervalle de mesure (21), qui est une extrémité de l'intervalle de mesure (21).

3. Procédé selon l'une des revendications précédentes, **caractérisé en ce que**, lors de la détermination de la valeur d'amplitude (24), une valeur moyenne et/ou une valeur médiane du signal d'écho (20) à l'intérieur de la fenêtre de mesure (23) est déterminée comme valeur d'amplitude.

4. Procédé selon l'une des revendications précédentes, **caractérisé en ce que** la fenêtre de mesure (23) est située exclusivement dans une plage temporelle de l'intervalle de mesure (21) dans laquelle le signal d'écho n'est pas dominé par des échos fixes dus au sol, des échos fixes dus du sol étant une perturbation du signal d'écho qui est causée par les réflexions du sol.

5. Procédé selon l'une des revendications précédentes, **caractérisé en ce que**, selon que le signal d'interférence est un signal parasite de premier type ou un signal parasite de deuxième type, une forme de signal est sélectionnée qui est utilisée pour exciter un transducteur acoustique dont l'écho se retrouve dans le signal d'écho (20) .

6. Procédé selon la revendication 5, **caractérisé en ce que**, en réponse au fait que le signal parasite est un signal parasite de premier type, un changement de la forme de signal est effectué.

7. Procédé selon l'une des revendications précédentes, **caractérisé en ce que**, sur la base de la valeur d'amplitude (24) et d'une valeur de comparaison, on détermine si un signal parasite de premier type ou un signal parasite de deuxième type est présent ou si aucun signal parasite n'est présent.

8. Procédé selon l'une des revendications précédentes, **caractérisé en ce que** le capteur acoustique (3) est un capteur à ultrasons.
